# EUROPEAN PATENT APPLICATION

(11) **EP 1 677 266 A1**
(43) Date of publication of application: **05.07.2006**
(21) Application number: 04030898.3
(22) Date of filing: 28.12.2004
(51) Int. Cl.: G07F 19/00, G06Q 10/00

(54) **System and method for transmitting transaction data to facilitate the purchase of goods and services**

(71) Applicant: Quake !, LLC, Dallas, TX 75205 (US)
(72) Inventor: O' Neal, Gray, R., Dallas TX 75205 (US)
(74) Representative: Curley, Donnacha John

(57) **Abstract**

A system and method for facilitating commercial transactions between a consumer and a supplier of goods and services includes a communication device for establishing a communications link between the consumer and the supplier. The communication device includes a memory device for prestoring transaction information data in a data base relating to a transaction between the consumer and the supplier. The communication device further includes a customer actuator for accessing the data base and for transmitting the transaction information data to the supplier over the communications link upon consumer actuation of the actuator.

## Description

### TECHNICAL FIELD OF THE INVENTION

The present invention relates to a commercial transaction system and method, and more particularly to a system and method for transmitting prestored transaction data to facilitate the purchase of goods and services.

### BACKGROUND OF THE INVENTION

Currently consumers purchase goods and services or reserve items to be purchased utilizing a telephone, the internet or cash registers at point-of-sale purchase by either presenting a credit card, debit card or writing a check together with presentation of necessary identification. The process of purchasing goods and services is generally time consuming and requires the disclosure of various financial information such as, for example, credit card numbers, bank account numbers and identification in order to complete the transaction. Additional disadvantages associated with such purchasing processes utilizing credit cards and bank checks is that the consumer's name and other personal information is plainly visible to third parties which makes possible fraudulent use of the consumer's financial information.

The cumbersome nature of current purchasing systems is illustrated by the following example when a consumer wishes to reserve a hotel room utilizing a cell telephone. The consumer, while simultaneously driving and utilizing the cell phone, must read to the hotel reservation personnel, credit card numbers, frequent guest ID numbers, e-mail addresses or mailing addresses to which hotel reservations are to be sent, the type of room desired and room rate requested. This process consumes both the time of the consumer and hotel personnel, and potentially exposes the consumer's credit or other financial information to third parties monitoring the conversation.

Consumers utilizing telephones, the internet and other electronic devices to transact business frequently encounter problems with security as well as the time consuming activities of providing repetitive information to suppliers of goods and services. As financial information is provided verbally over a telephone or cell phone, or transmitted over the internet, consumer's credit card information is available to be stolen by third parties. The time and distraction of inputting credit card information on internet sites or reading credit card numbers, shipping information and reservation criteria is both time consuming and potentially hazardous to the consumer if performing multiple tasks.

A need has thus arisen for a system and method for transmitting transaction data in connection with the purchase of goods and services which transmits such data automatically, reduces the possibility of information and identity theft and reduces the time involved for both the consumer and supplier of goods and services in a transaction.

### SUMMARY OF THE INVENTION

In accordance with the present invention, a system and method for transmitting transaction data in connection with the purchase of goods and services is provided. The system utilizes a communication device for establishing a communication link between a consumer and supplier of goods and services. The communication device includes a memory for prestoring consumer transaction data necessary for completing the transaction. The communication device includes a consumer actuator for accessing the data base of prestored consumer transaction data and for transmitting the consumer transaction data to the supplier over the communications link upon consumer actuation of the actuator.

### BRIEF DESCRIPTION OF THE DRAWINGS

For a more complete understanding of the present invention and for further advantages thereof, reference is now made to the following Description of the Preferred Embodiments taken in conjunction with the accompanying Drawings in which:
FIG. 1 is a process flow diagram illustrating the present method for facilitating the purchase of goods and services;
FIG. 2 is a block diagram of the present method; and
FIG. 3 is a schematic block diagram illustrating the present system.

### DESCRIPTION OF THE PREFERRED EMBODIMENTS

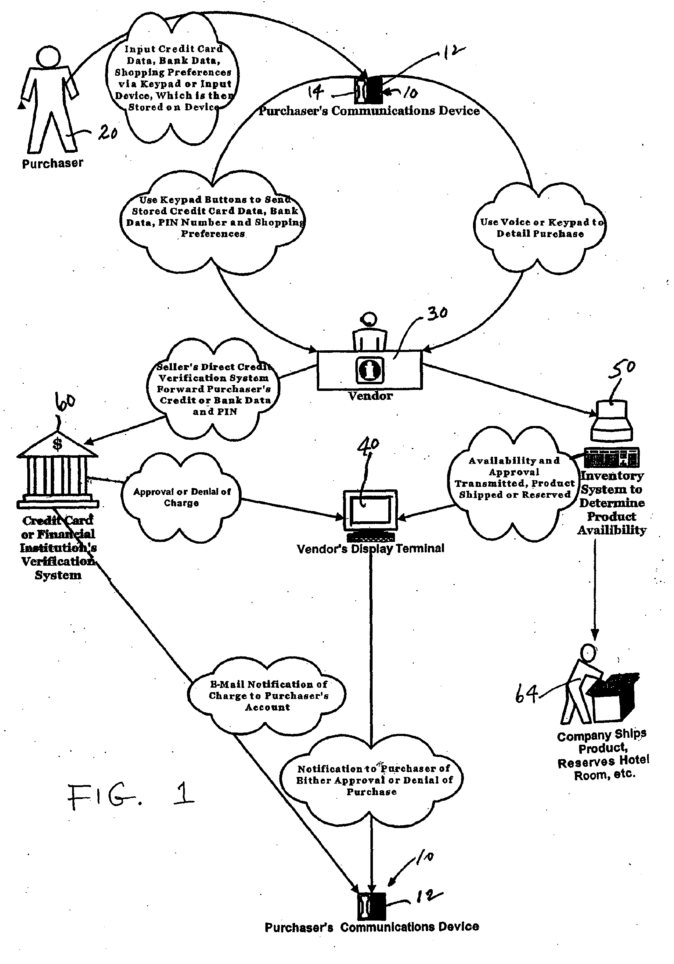

Referring to FIG. 1, the present system and method utilizes a communications device 10 such as, for example, a telephone, cellular telephone, personal digital assistant (PDA), wireless communication device, desktop or notebook computer, or other communications device to establish a communications link between a purchaser 20 and a vendor 30 of goods and services. Communications device 10 includes a keypad 12 for use by purchaser 20 and a memory 14 for storing transaction data input by purchaser 20 into communications device 10 utilizing keypad 12. Purchaser transaction data includes, for example, credit card numbers; financial institution data; shopping preferences, such as, for example, airline seat preferences, hotel room type, size of bed, and floor preference; hotel club numbers; billing addresses for credit card information; shipping addresses for receiving products to be supplied by vendor 30, and other information necessary to complete a transaction for goods and services. Such information will hereinafter to referred to as "transaction information data".

Purchaser 20 contacts vendor 30 utilizing voice or keypad 12 of communications device 10 to request the purchase of goods and services, such as for example, a hotel room reservation, airline seat or purchase of a book. Vendor 30 requests that purchaser 20 forward purchaser's transaction information data, which is triggered by purchaser 20 actuating an appropriate function key on keypad 12 of communications device 10 together with the input of a purchaser personal identity number (PIN). The actuation by purchaser 20 of a single function key of communications device 10 transmits all necessary transaction information data to vendor 30 without purchaser 20 specifically providing each item of the transaction information to vendor 30. The transaction information data is provided to vendor 30 in a secure manner over the communications link between communications device 10 and vendor 30 and is provided in an efficient manner since the purchaser is not required to enter specific data into communications device 10 or provide the transaction information data verbally to vendor 30.

Upon receipt of the transaction information data and purchase information from communications device 10 and purchaser 20, respectively, vendor 30 forwards the relevant information to vendor's inventory system 50 to determine product availability. Additionally, vendor 30 provides financial information that is included in the transaction information data to a credit card or financial institution 60 for verification. Approval or denial of the purchase is provided from the credit card or financial institution 60 to a vendor 30 display terminal 40 which also receives information from inventory system 50 relating to product availability and shipment.

Upon charge approval and product availability, vendor 30 terminal display 40 notifies purchaser 20 via communications device 10 that the product is shipped or service reserved at step 64. Additionally, credit card or financial institution 60 notifies purchaser 20 that a charge has been made to an account of purchaser 20, which notice may also be provided via communications device 10.

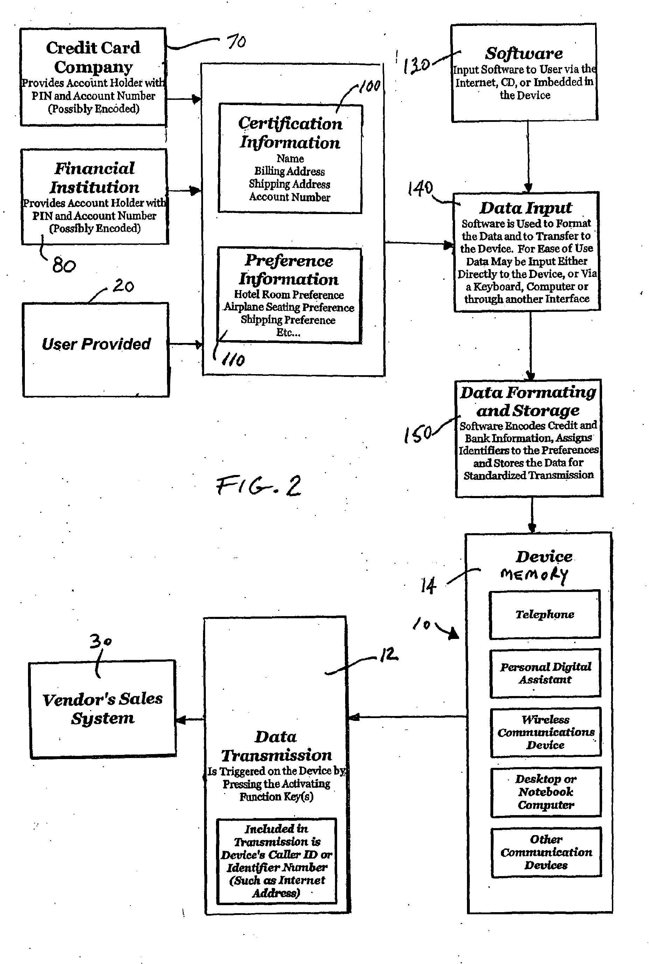

Referring to FIG. 2, a block diagram of the present system and method is illustrated. Purchaser 20 collects the necessary financial data from a credit card company 70 and a financial institution 80 of purchaser 20 for storage in memory 14 of communications device 10. As previously stated, such transaction information data includes certification information 100 such as name, billing address, shipping address and account numbers as well as preference information 110 such as, for example, hotel room preference, airline seating preference and shipping preference. Software 130 enables the input of transaction information data by purchaser 20 into memory 14 at step 140. Software 130 may reside within communications device 10 or reside on other devices external to communications device 10 in order to format the transaction information data and transfer this data to memory 14. The data may be input directly to communications device 10 via keypad 12, an external computer or other interface device.

At step 150, software 130 organizes the transaction information data for transmission to vendor 30 in formats that inventory system 50 and credit card or financial institution 60 will recognize in preassigned standard fields together with security information for storage in memory 14.

Once the transaction information data is stored within memory 14 of communications device 10, transaction information data is transmitted to vendor 30 by purchaser 20 activating one or more keys of keypad 12 and inputting a purchaser 20 PIN number.

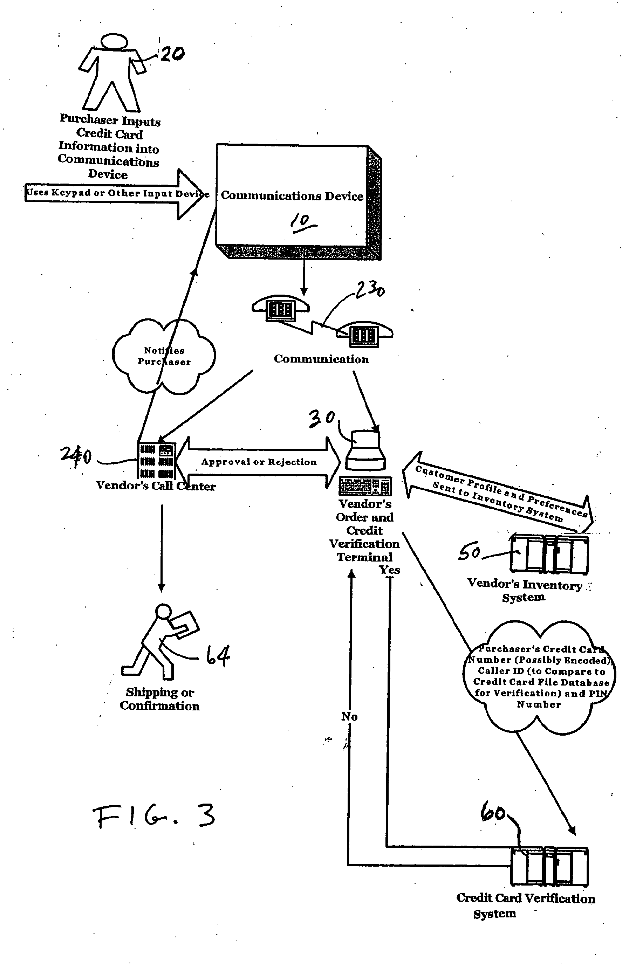

Referring now to FIG. 3, a further description of the present system and method is provided. As previously stated, purchaser 20 utilizing keypad 12 of communications device 10 or other input devices, provides transaction information data for storage in memory 14 of communications device 10. Communications device 10 creates a communications link 230 to vendor 30 between purchaser 20 and vendor 30, and particularly terminal 40 (FIG. 1).

At the time of purchase, purchaser 20 depresses one of the keys of keypad 12 on communications device 10 and inputs a purchaser PIN number, which then transmits the transaction information data to vendor 30. The data is then routed to inventory system 50 and credit card or financial institution 60 for financial approval. Credit approval or disapproval is transmitted to vendor 30 together with inventory information to allow vendor 30 to verify the sale via a call center 240 which in turn notifies purchaser 20 via communications device 10 for the approval or rejection of the transaction. Upon approval, shipping or confirmation is provided at step 64.

Other alteration and modification of the invention will likewise become apparent to those of ordinary skill in the art upon reading the present disclosure, and it is intended that the scope of the invention disclosed herein be limited only by the broadest interpretation of the appended claims to which the inventor is legally entitled.

## Claims

1. A system for facilitating commercial transactions between a consumer and a supplier of goods and services comprising:
a communication device for establishing a communications link between the consumer and the supplier;
said communication device including a memory device for prestoring transaction information data in a data base relating to a transaction between the consumer and the supplier; and
said communication device including a customer actuator for accessing said data base and for transmitting said transaction information data to the supplier over said communications link upon consumer actuation of the actuator.

2. The system of claim 1 wherein said communications device is selected from the group comprising a telephone, personal digital assistant, wireless communications device, desktop computer and notebook computer.

3. The system of claim 1 wherein said transaction information data is selected from the group comprising customer name, billing address, shipping address, bank account numbers, credit card numbers, hotel room preference, airline seating preference, and shipping preference.

4. The system of claim 1 wherein said consumer actuator includes a keypad key.

5. A method for facilitating commercial transactions between a consumer and a supplier of goods and services comprising:
establishing a communications link between the consumer and the supplier using a communication device;
prestoring transaction information data in a data base contained in a memory device of the communications device, the data relating to a transaction between the consumer and the supplier; and
accessing the data base and transmitting the transaction information data to the supplier over said communications link upon consumer actuation of an actuator included within the communications device.

6. The method of claim 5 wherein the communications device is selected from the group comprising a telephone, personal digital assistant, wireless communications device, desktop computer and notebook computer.

7. The method of claim 5 wherein the transaction information data is selected from the group comprising customer name, billing address, shipping address, bank account numbers, credit card numbers, hotel room preference, airline seating preference, and shipping preference.

8. The method of claim 5 wherein the consumer actuator includes a keypad key.
